(19) Europäisches Patentamt

European Patent Office

Office européen des brevets

(11) **EP 2 164 079 B1**

(12) **EUROPEAN PATENT SPECIFICATION**

(45) Date of publication and mention of the grant of the patent:
**18.06.2014 Bulletin 2014/25**

(51) Int Cl.:
*H01B 17/56* (2006.01)     *B29C 55/12* (2006.01)
*B32B 15/09* (2006.01)     *C08J 5/18* (2006.01)
*C08L 67/02* (2006.01)     *H01G 4/18* (2006.01)
*B29K 67/00* (2006.01)     *B29L 7/00* (2006.01)

(21) Application number: **08765052.9**

(22) Date of filing: **28.05.2008**

(86) International application number:
**PCT/JP2008/060239**

(87) International publication number:
**WO 2008/149869 (11.12.2008 Gazette 2008/50)**

(54) **BIAXIALLY ORIENTED FILM FOR ELECTRICAL INSULATION**

BIAXIAL ORIENTIERTER FILM FÜR ELEKTRISCHE ISOLATION

FILM À ORIENTATION BIAXIALE POUR L'ISOLATION ÉLECTRIQUE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **04.06.2007   JP 2007147880**

(43) Date of publication of application:
**17.03.2010   Bulletin 2010/11**

(73) Proprietor: **Teijin Dupont Films Japan Limited
Chiyoda-ku
Tokyo 100-0013 (JP)**

(72) Inventor: **YOSHIDA, Tetsuo
Anpachi-gun
Gifu 503-0123 (JP)**

(74) Representative: **Cockerton, Bruce Roger
Carpmaels & Ransford LLP
One Southampton Row
London WC1B 5HA (GB)**

(56) References cited:
JP-A- 06 031 881          JP-A- 2002 348 361
JP-A- 2006 077 250     JP-A- 2006 199 917
US-A1- 2003 236 385   US-A1- 2005 221 096

**Description**

TECHNICAL FIELD

The present invention relates to a biaxially oriented film suitable for electric insulation. More specifically, it relates to a biaxially oriented film suitable for electric insulation, which has high dielectric strength at a temperature range from room temperature to a high temperature and maintains high dielectric strength even after it is heated for a long time.

BACKGROUND OF THE ART

Heretofore, films made of polypropylene resin, polystyrene resin, polyester resin and polyphenylene sulfide resin have been known as electric insulating films made of crystalline thermoplastic resins and used as films for film capacitors, films for flexile printed circuit boards, or motor insulating films. The film capacitors are manufactured by combining the above crystalline thermoplastic resin film and a metal thin film such as aluminum foil and winding up or laminating them together. The flexible printed circuit boards are manufactured by forming a metal thin film on at least one side of the crystalline thermoplastic resin film to form a circuit. The motor insulating films are used as a wedge material or a slot material for insulating a motor coil from a stator.

Since these film capacitors and motors have been reduced in size and packaged in recent years to meet demand for small-sized electric or electronic parts, dielectric strength at a high temperature range is also required in addition to dielectric strength at a room temperature range. Especially for application in automobiles, they are used not only in a driver's cabin but also in an engine room and therefore a film capacitor having excellent dielectric strength at a high temperature range is required as well.

JP-A 2000-173855 discloses that a polyethylene-2,6-naphthalate film having an intrinsic viscosity and a crystallization degree within specific ranges is used as a polyester film for capacitors having such high heat resistance, moisture resistance and electric properties that it can be used in a car engine room. JP-A 2005-289065 proposes a thermoplastic resin film which contains at least one stabilizer in an amount of 50 to 15, 000 ppm based on the weight of the film as a capacitor film having excellent dielectric property and dielectric strength at room temperature and discloses that the stabilizer is added during the thermoplastic resin is produced. Similarly, JP-A 2003-301039 discloses that at least one stabilizer having oxidation decomposition prevention ability is made existent in an amount of 100 to 10,000 ppm based on a crystalline polyester. This document emphasizes that when the stabilizer is existent while it is chemically bonded to the crystalline polyester, the number of surface defects produced can be reduced and the contamination of a film production device can be suppressed at the time of production. The above document also discloses that a hindered phenol having a carboxyl group and/or an ester group is preferably mixed with the polyester during the polycondensation reaction of the polyester in order to chemically bond together the polyester and the stabilizer.

Along with the downsizing of electric and electronic parts and the installation of electric equipment in automobiles, these members have higher dielectric strength at a wider temperature range from room temperature to around 150°C than before and are used at a high temperature for a long time. Therefore, the development of an insulation-resistant film which can maintain such high dielectric strength for a long time is desired.

DISCLOSURE OF THE INVENTION

It is an object of the present invention to provide a biaxially oriented film suitable for electric insulation, which has high dielectric strength at a temperature range from room temperature to a high temperature and maintains high dielectric strength even after it is heated for a long time.

The inventors of the present invention have conducted intensive studies to attain the above object. Unlike other technical fields such as resin molded products, in the field of films, a method in which additives are added at any point of the polycondensation reaction of a resin to improve the dispersibility in a film of these additives is mainly employed, and it is proposed to add a radical scavenging stabilizer such as a hindered phenol during the polycondensation reaction as well. The inventors of the present invention have found that a polyester resin and a radical scavenging stabilizer do not react with each other in a film obtained by adding the radical scavenging stabilizer at the time of producing a film instead of the conventional method with the result that the radical scavenging ability of the radical scavenging stabilizer is enhanced and a multiplier effect is obtained from a titanium compound as a catalyst, whereby higher dielectric strength than before is obtained at a temperature range from room temperature to a high temperature and maintained even after a long-term heat treatment. The present invention has been accomplished based on this finding.

That is, the above object of the present invention is attained by a biaxially oriented polyester film for electric insulation, wherein the film comprises at least one layer made of a polyester, the polyester of the at least one layer contains a titanium compound as a catalyst and a radical scavenging stabilizer, the content of the radical scavenging stabilizer is 1,000 to 50, 000 ppm based on the weight of the polyester, and the amount of the radical scavenging stabilizer chemically bonded to the polyester does not exceed 200 ppm.

According to a preferred aspect of the present invention, there is provided a biaxially oriented film for electric insulation, wherein the content of the radical scavenging stabilizer is 16,000 to 50,000 ppm, the radical scavenging stabilizer is at least one selected from the group consisting of a phenol-based stabilizer and an amine-based stabilizer, the melting point of the radical scavenging stabilizer is 200°C or higher, the polyester resin is polyethylene-2,6-naphthalene dicarboxylate, the breakdown voltage difference represented by the following equation (1) is 50 to 110 V/$\mu$m, and the breakdown voltage at 150°C ($BDV_{t150}$) is not less than 280 V/$\mu$m, and at least one of the following conditions is satisfied: the breakdown voltage at 25°C after 300 hours of a heat treatment at 150°C is not less than 380 V/$\mu$m and inert particles are contained in an amount of 0.0001 to 0.1 wt%.

$$\texttt{Breakdown voltage difference} = BDV_{t25} - BDV_{t150} \quad (1)$$

(In the formula, $BDV_{t25}$ is a breakdown voltage at 25°C (V/$\mu$m) and $BDV_{t150}$ is a breakdown voltage at 150°C (V/$\mu$m).)

The biaxially oriented film for electric insulation of the present invention can be used in a film capacitor or for motor insulation.

Further, the present invention includes a biaxially oriented laminated film comprising the biaxially oriented film for electric insulation of the present invention and a metal layer laminated on at least one side of said biaxially oriented polyester film.

BEST MODE FOR CARRYING OUT THE INVENTION

The present invention will be described in detail hereinunder.

<polyester>

The polyester in the present invention is a polymer obtained through the polycondensation of a diol and a dicarboxylic acid. Examples of the dicarboxylic acid include terephthalic acid, isophthalic acid, 2,6-naphthalenedicarboxylic acid,
4,4'-diphenyldicarboxylic acid, adipic acid and sebacic acid. Examples of the diol include ethylene glycol, 1,4-butanediol, 1,4-cyclohexanedimethanol and 1,6-hexanediol. Out of polyesters obtained from these dicarboxylic acids and diols, polyethylene terephthalate and
polyethylene-2,6-naphthalene dicarboxylate (may be referred to as PEN hereinafter) are preferred, and polyethylene-2,6-naphthalene dicarboxylate is particularly preferred from the viewpoint of dielectric strength at a high temperature.

The polyester in the present invention may be a homopolymer, a copolymer with another polyester, or a mixture of two or more polyesters. The content of the another component in the copolymer or the mixture is not more than 10 mol%, more preferably not more than 5 mol% based on the total number of moles of recurring units. Examples of the comonomer include diol components such as diethylene glycol, neopentyl glycol and polyalkylene glycol and dicarboxylic acid components such as adipic acid, sebacic acid, phthalic acid, isophthalic acid, terephthalic acid, naphthalenedicarboxylic acid and 5-sodium sulfoisophthalic acid. Out of these, a component different from the above main components may be used as the comonomer.

The polyester of the present invention can be obtained by a conventionally known method, for example, one in which a polyester having a low degree of polymerization is directly obtained through a reaction between a dicarboxylic acid and a glycol, or one in which a lower alkyl ester of a dicarboxylic acid and a glycol are reacted with each other in the presence of a transesterification catalyst and then a polymerization reaction is carried out in the presence of a polymerization catalyst.

A polyester obtained by using a titanium compound as a catalyst at the time of producing the polyester is used in the film of the present invention. Thereby, the dielectric strength of the film of the present invention is further improved by a multiplier effect obtained from the titanium compound and a radical scavenging stabilizer. The titanium compound is preferably soluble in the polyester. Examples of the titanium compound soluble in the polyester include organic titanium compounds such as tetraethyl titanate, tetrapropyl titanate, tetrabutyl titanate, tetraphenyl titanate and partial hydrolysates thereof, ammonium titanyl oxalate, potassium titanyl oxalate, titanium trisacetyl acetonate, and products obtained by reacting the above titanium compounds with an aromatic polycarboxylic acid or anhydride thereof such as trimellitic anhydride. Out of these, tetrabutyl titanate and titanium trimellitate are preferred. Titanium trimellitate is obtained by reacting trimellitic anhydride with tetrabutyl titanate.

The titanium compound may be added before the start of a transesterification reaction or during a transesterification reaction, or right before a polycondensation reaction after the end of the transesterification reaction in the transesterification method. In the esterification method, it may be added after the end of an esterification reaction or right before a polycondensation reaction.

The content of the titanium compound in the polyester is preferably 5 to 20 ppm, more preferably 7 to 18 ppm, particularly preferably 8 to 17 ppm in terms of the titanium atom based on the weight of the polyester. When the content of the titanium compound falls below the lower limit, the production of the polyester may be delayed and when the content exceeds the upper limit, the heat-resistant stability of the obtained polyester degrades and the dielectric strength may be reduced by the deposited titanium compound.

Since an antimony compound which is generally used as a polymerization catalyst for polyesters readily forms a deposit and its amount used is large, a deposit derived from the antimony compound causes the reduction of dielectric strength, whereby a film having sufficiently high dielectric strength may not be obtained even when a radical scavenging stabilizer is contained in the polyester. When the titanium compound is used, the amount of the catalyst can be made very small as long as a polymerization reaction can be maintained, thereby making it possible to reduce the amount of a deposit which causes the reduction of dielectric strength with the result that a film having excellent dielectric strength can be obtained. By using a titanium compound soluble in polyester resin, the amount of a deposit become small and the dielectric strength further improves.

The intrinsic viscosity of the polyester in the present invention is preferably not less than 0.40 dl/g, more preferably 0.40 to 0.80 dl/g when measured in o-chlorophenol at 35°C. When the intrinsic viscosity is lower than 0.4 dl/g, breakage occurs frequently at the time of producing a film, or the strength of a formed product may become insufficient. When the intrinsic viscosity is higher than 0.8 dl/g, productivity at the time of polymerization may drop.

<radical scavenging stabilizer>

A radical scavenging stabilizer is added as an essential component to the biaxially oriented polyester film for electric insulation of the present invention. The radical scavenging stabilizer has the function of changing a radical formed in a material for some reason or other to which the radical scavenging stabilizer has been added, into a state free from an unpaired electron having low reactivity by receiving one electron from the molecule of the radical scavenging stabilizer so as to stop the chain reaction of autoxidation. The radical scavenging stabilizer itself becomes a stable radical having low reactivity after trapping the radical.

Preferred examples of the radical scavenging stabilizer include phenol-based stabilizers and amine-based stabilizers.

The phenol-based stabilizers are hindered phenols, out of which hydroxyphenyl propionate and hydroxybenzyl benzene having a high molecular weight are preferred. Specific examples of these hindered phenols include pentaerythrityl-tetrakis[3-(3,5-di-t-butyl-4-hydroxyphenyl)propionate], octadecyl-3-(3,5-di-t-butyl-4-hydroxyphenyl)propionate, 3,3',3",5,5',5"-hexa-tert-butyl-a,a',a"-(mesitylene-2 ,4,6-triyl)tri-p-cresol, 1,3,5-tris(3,5-di-tert-butyl-4-hydroxybenzyl)-1,3,5-triazine-2,4,6(1H,3H,5H)-trione and ethylenebis(oxyethylene)bis[3-(5-tert-butyl-4-hydroxy-m-tolyl)propionate. Out of these, pentaerythrityl-tetrakis[3-(3,5-di-t-butyl-4-hydroxyphenyl)propionate], octadecyl-3-(3,5-di-t-butyl-4-hydroxyphenyl)propionate, 3,3',3",5,5',5"-hexa-tert-butyl-a,a',a"-(mesitylene-2 ,4,6-triyl)tri-p-cresol and 1,3,5-tris(3,5-di-tert-butyl-4-hydroxybenzyl)-1,3,5-triazine-2,4,6(1H,3H,5H)-trione are preferred. Out of these hindered phenols, those having a melting point of 200°C or higher are preferred when the contamination of a die at the time of producing a film is taken into consideration, as exemplified by 3,3',3",5,5',5"-hexa-tert-butyl-a,a',a"-(mesitylene-2 ,4,6-triyl)tri-p-cresol and 1,3,5-tris(3,5-di-tert-butyl-4-hydroxybenzyl)-1,3,5-triazine-2,4,6(1H,3H,5H)-trione.

The amine-based stabilizers are hindered amines such as compounds having bis(2,2,6,6-tetramethyl-4-piperidinyl)sebacate in the basic structure, called "HALS".

These compounds may be used alone or in combination of two or more. However, when a phenol-based stabilizer and an amine-based stabilizer are used in combination, they are often reacted with each other to lose their activities. When a plurality of stabilizers are used in combination, the stabilizers of the same kind are preferably used in combination.

The amount of the radical scavenging stabilizer of the present invention which is chemically bonded to the polyester in the film does not exceed 200 ppm based on the weight of the polyester. When the radical scavenging stabilizer does not react with the polyester or most of it does not react with the polyester, it has higher radical scavenging ability than the radical scavenging stabilizer chemically bonded to the polyester. Further, when a titanium compound which rarely reduces dielectric strength is used as a catalyst which is one of the causes of affecting the dielectric strength of the film, the effect of the radical scavenging stabilizer is fully obtained and higher dielectric strength than before is obtained at a temperature range from room temperature to a high temperature and maintained even after a long-term heat treatment. When the amount of the radical scavenging stabilizer chemically bonded to the polyester does not exceed 200 ppm, the content of the radical scavenging stabilizer not chemically bonded to the polyester in the film can be greatly increased, thereby making it possible to obtain higher dielectric strength. When the radical scavenging stabilizer is added during the polycondensation of the polyester, the radical scavenging stabilizer and the polyester are chemically bonded together to increase the melt viscosity during the polycondensation reaction, thereby making it difficult to add a certain amount or more, specifically 16,000 ppm or more of the radical scavenging stabilizer with the result of reduced radical scavenging ability.

The amount of the radical scavenging stabilizer chemically bonded to the polyester can be obtained by the following measurement method. The film is dissolved in a mixed solvent of hexafluoroisopropanol and chloroform, methanol is added to reprecipitate the polymer, the precipitated polymer is separated, methanol is added, and ultrasonic cleaning is carried out to remove the residual low molecular weight component. The obtained sample is dried under reduced pressure and measured by $^1$H-NMR to obtain the amount of the radical scavenging stabilizer chemically bonded to the polyester. When the amount of the radical scavenging stabilizer chemically bonded to the polyester exceeds 200 ppm, as it exceeds the detection limit of the NMR measuring device, quantitative determination becomes possible.

In order to reduce the amount of the radical scavenging stabilizer chemically bonded to the polyester in the film to 200 ppm or less, the radical scavenging stabilizer must be added after the polycondensation reaction of the polyester ends completely, and further the time for melt mixing them together is preferably made short. Stated more specifically, it is preferred to add the radical scavenging stabilizer during the time from the end of the polycondensation reaction of the polyester to film production. To this end, a production method which will be described hereinafter is preferably employed.

The content of the radical scavenging stabilizer is 1,000 to 50,000 ppm based on the weight of the polyester. The lower limit of the content of the radical scavenging stabilizer is preferably 3,000 ppm, more preferably 5,000 ppm, much more preferably 10,000 ppm, particularly preferably 16, 000 ppm, most preferably 20,000 ppm. The upper limit of the content of the radical scavenging stabilizer is preferably 45, 000 ppm, more preferably 40,000 ppm. When the content of the radical scavenging stabilizer falls below the lower limit, dielectric strength at 150°C and dielectric strength after a long-term heat treatment may become insufficient. When the content of the radical scavenging stabilizer exceeds the upper limit, the improvement of dielectric strength commensurate with an increase in the amount of the radical scavenging stabilizer cannot be expected and a dispersion failure occurs due to the addition of a large amount of the radical scavenging stabilizer, whereby the film may be broken or its surface may be roughened.

<inert particles>

The biaxially oriented polyester film of the present invention may contain inert particles to provide windability at the time of producing a film. At least one type of inorganic particles such as calcium carbonate, silica, talc or clay, organic particles of a thermoplastic resin or thermosetting resin such as silicone or acryl, or inorganic pigment particles such as barium sulfate or titanium oxide may be used as the inert particles. The inert particles may be used in limits that do not ruin the effect of the present invention. For example, inert particles having an average particle diameter of 0.001 to 5 $\mu$m may be contained in an amount of 0.0001 to 1 wt% based on the weight of the film. The average particle diameter of the inert particles is more preferably 0.01 to 3 $\mu$m.

As for the content of the inert particles, after the film is dissolved by selecting a solvent which dissolves the polyester and not the inert particles, the particles are separated by centrifugal separation to obtain the ratio (wt%) of the weight of the particles to the weight of the film.

<other additives>

A small amount of at least one selected from the group consisting of a sulfur-based stabilizer and a phosphorus-based stabilizer may be added to the biaxially oriented polyester film of the present invention. When the stabilizer is used in combination with the radical scavenging stabilizer, the dielectric strength can be further increased.

Examples of the sulfur-based stabilizer include thioether-based compounds such as tetra-ester type high molecular weight thioether compounds.

Examples of the phosphorus-based stabilizer include phosphonic acid, phosphate-based compounds and phosphite-based compounds. Out of these, phosphite-based compounds are preferably used.

When the sulfur-based stabilizer or the phosphorus-based stabilizer is used in combination with the radical scavenging stabilizer, the dielectric strength of the film can be further increased effectively. However, even when a large amount of the stabilizer is added, a multiplier effect commensurate with that amount is not obtained. Therefore, it is preferred to add the stabilizer in as small an amount as possible with which the above effect is obtained. The content of the stabilizer is preferably 1 to 10, 000 ppm, more preferably 5 to 5,000 ppm based on the weight of the polyester. When the content of the stabilizer falls below the lower limit, the dielectric strength multiplier effect may not be fully obtained. Even when the stabilizer is added in an amount larger than the upper limit of the content, not only the multiplier effect commensurate with that amount is not obtained but also the heat resistance of the polyester may be degraded.

\<dielectric strength\>

The dielectric strength of the biaxially oriented polyester film of the present invention is evaluated by its breakdown voltage. Preferably, the biaxially oriented polyester film of the present invention has a breakdown voltage difference (may be abbreviated as $BDV_{t25-t150}$ hereinafter) represented by the following equation (1) of 50 to 110 V/$\mu$m and a breakdown voltage at 150°C ($BDV_{t150}$) of not less than 280 V/$\mu$m.

$$\texttt{Breakdown voltage difference} = BDV_{t25} - BDV_{t150} \quad (1)$$

(In the formula, $BDV_{t25}$ is a breakdown voltage at 25°C (V/$\mu$m) and $BDV_{t150}$ is a breakdown voltage at 150°C (V/$\mu$m).)
The upper limit of the breakdown voltage difference is more preferably not more than 105 V/$\mu$m, more preferably not more than 100 V/$\mu$m. When the breakdown voltage difference exceeds the upper limit and the film is used in a capacitor, electric properties, especially properties at a high temperature are not satisfactory and the film may not be advantageously used for application in which the use environment includes a high temperature range. The above breakdown voltage difference is achieved when the polyester is used, the radical scavenging stabilizer is contained in the biaxially oriented polyester film in limits specified by the present invention, and the catalyst is a titanium compound. The breakdown voltage difference can be made much smaller by using polyethylene-2,6-naphthalene dicarboxylate as the polyester and further reduced to 100 V/$\mu$m or less when the radical scavenging stabilizer is contained in an amount of not less than 15,000 ppm based on the weight of the polyester.
The breakdown voltage at 25°C of the biaxially oriented polyester film is preferably not less than 370 V/$\mu$m, more preferably not less than 380 V/$\mu$m, much more preferably not less than 390 V/$\mu$m, particularly preferably not less than 400 V/$\mu$m. The above breakdown voltage is achieved when the polyester is used, the radical scavenging stabilizer is contained in the biaxially oriented polyester film in limits specified by the present invention, and the catalyst is a titanium compound.
The breakdown voltage at 150°C of the biaxially oriented polyester film is preferably not less than 280 V/$\mu$m, more preferably not less than 290 V/$\mu$m, much more preferably not less than 295 V/$\mu$m, particularly preferably not less than 300 V/$\mu$m. The above breakdown voltage is achieved when the polyester is used, the radical scavenging stabilizer is contained in the biaxially oriented polyester film in limits specified by the present invention, the amount of the radical scavenging stabilizer chemically bonded to the polyester does not exceed 200 ppm, and the catalyst is a titanium compound. The effect obtained when the amount of the radical scavenging stabilizer chemically bonded to the polyester does not exceed 200 ppm becomes striking when the catalyst is a titanium compound in the improvement of the breakdown voltage at a high temperature range of 150°C.
The breakdown voltage at 25°C is a value obtained by measuring at a DC current and a voltage elevation rate of 0.1 kV/s by using the ITS-6003 of Tokyo Seiden Co., Ltd. in accordance with the plate electrode method specified in JIS C2151 as will be detailed in the measurement method. The breakdown voltage at 150°C is a value obtained by measuring in silicon oil at 150°C, a DC current and a voltage elevation rate of 0.1 kV/s by using the TOS5101 withstand voltage tester (of Kikusui Electronics Corp.) in accordance with JIS K6911 as will be detailed in the measurement method. The breakdown voltage difference ($BDV_{t25-t150}$) is obtained by subtracting a breakdown voltage at 150°C from a breakdown voltage at 25 °C.
Two breakdown voltages at 25°C and 150°C are evaluated as indices for evaluating the dielectric strength at a temperature range from room temperature to a high temperature in the present invention. The breakdown voltage value of a resin film continuously decreases as the temperature rises and sharply drops at a certain temperature. Therefore, the technical significance indicated by the value of the difference between the breakdown voltage at 25°C and the breakdown voltage at 150°C in the present invention is that a reduction in breakdown voltage caused by a temperature rise is smaller than that of a film of a resin alone and that there is no sharp drop in breakdown voltage between 25°C and 150°C.
The biaxially oriented polyester film of the present invention has a breakdown voltage at 25°C after 300 hours of a heat treatment at 150°C of preferably not less than 380 V/$\mu$m, more preferably not less than 390 V/$\mu$m, much more preferably not less than 395 V/$\mu$m, particularly preferably not less than 400 V/$\mu$m. Since the dielectric strength of the film after long-term heating is maintained, even when the use environment is a high temperature such as the inside of a car engine room, the film can maintain long-term reliability as an insulating film for capacitors. This breakdown voltage is achieved when the polyester is used, the radical scavenging stabilizer is contained in the biaxially oriented polyester film in limits specified by the present invention, the amount of the radical scavenging stabilizer chemically bonded to the polyester does not exceed 200 ppm, and the catalyst is a titanium compound. The effect obtained when the amount of the radical scavenging stabilizer chemically bonded to the polyester does not exceed 200 ppm is obtained as an extremely striking effect that the breakdown voltage becomes equal or higher than the initial breakdown voltage even after a long-term heat treatment at 150°C when the catalyst is a titanium compound.

The breakdown voltage after a long-term heat treatment in the present invention is a breakdown voltage measured at 25°C after the film is heated at 150°C for 300 hours and left to stand at room temperature. The method of measuring the breakdown voltage is the same as the above method of measuring the breakdown voltage at 25°C.

<laminated constitution>

The biaxially oriented polyester film of the present invention may consist of a single layer or two or more layers. When it consists of two or more layers, it must include at least one polyester layer which contains a titanium compound as a catalyst and a radical scavenging stabilizer. When it consists of three or more layers, it preferably has a plurality of the polyester layers.

<film thickness>

The total thickness of the biaxially oriented polyester film of the present invention is preferably 0.1 to 20 $\mu$m, more preferably 0.5 to 15 $\mu$m, particularly preferably 1.0 to 10 $\mu$m. When the film thickness falls below the lower limit, film formation becomes difficult and dielectric strength may deteriorate. When the film thickness exceeds the upper limit, it may be difficult to reduce the size of a film capacitor or a motor insulating member.

<coating layer>

The biaxially oriented polyester film of the present invention may have a coating layer on at least one of the outermost layers. The coating layer is obtained by applying a coating composition comprising a binder resin and a solvent to the biaxially oriented film. A thermoplastic resin or a thermosetting resin may be used as the binder resin, as exemplified by polyesters, polyimides, polyamides, polyester amides, polyolefins, polyvinyl chloride, poly(meth)acrylic acid esters, polyurethane, polystyrene, and copolymers and mixtures thereof. Out of these binder resins, polyester copolymers are particularly preferred. Examples of the solvent include organic solvents such as toluene, ethyl acetate and methyl ethyl ketone, mixtures thereof and water.

The coating layer of the present invention may further contain a crosslinking agent, a surfactant and inert particles as components forming the coating layer. An example of the surfactant is a polyalkylene oxide.

In the present invention, to form a coating layer, a method in which a coating composition is applied to at least one side of the biaxially oriented film and dried, and a method in which a coating composition is applied to a film which can be stretched, dried, stretched and optionally heated may be employed. The film which can be stretched is an unstretched film, monoaxially oriented film or biaxially oriented film, out of which a film which has been stretched monoaxially in a film extrusion direction (longitudinal direction) is particularly preferred.

When the coating composition is applied to the film of the present invention, application is preferably carried out in a clean atmosphere, that is, a film forming step in order to improve the adhesion of the coating film. When the ordinary coating step is carried out, that is, a film which has been heat set after biaxial stretching is coated in a step separate from the film production step, dust and dirt are easily contained.

To apply the coating composition to the film, any known coating technique may be used, such as roll coating, gravure coating, roll brush coating, spray coating, air knife coating, impregnation or curtain coating, all of which may be used alone or in combination.

<method of producing a biaxially oriented polyester film>

The biaxially oriented polyester film of the present invention is obtained by producing a polyester resin composition comprising a polyester and a radical scavenging stabilizer as essential components and biaxially stretching the composition. To reduce the amount of the radical scavenging stabilizer chemically bonded to the polyester to 200 ppm or less, the polyester resin composition is preferably produced by any one of the following methods.

1) The polyester and the radical scavenging stabilizer are melt kneaded together by means of a double-screw kneader.
2) A polyester chip and a radical scavenging stabilizer powder are blended together in advance and the obtained blend is supplied in a solid state at the time of extruding a film.

The methods 1) and 2) of producing a polyester resin composition will be detailed hereinunder.

In the method 1) of producing a polyester resin composition, a polymerized polyester chip and a radical scavenging stabilizer are melt kneaded together by means of a double-screw kneader. Stated more specifically, a predetermined amount of the radical scavenging stabilizer is added to and mixed with the solid resin, and then the resulting mixture is melt kneaded by means of a double-screw kneader. Alternatively, the resin is molten, a predetermined amount of the radical scavenging stabilizer is added to the molten resin, and the resulting mixture is melt kneaded by means of a double-screw kneader. In this case, the radical scavenging stabilizer may be added directly, or a master polymer may be produced in advance and added. The content of the radical scavenging stabilizer in the master polymer is preferably 0.5 to 5 wt%. When the content of the radical scavenging stabilizer falls below the lower limit, the amount of the master polymer increases, which may not be efficient. It may be difficult to produce a master polymer having a radical scavenging stabilizer content higher than the upper limit.

In the method 2), a polymerized polyester chip is blended with a radical scavenging stabilizer powder in advance, and the resulting blend is added to the raw material input port of an extruder used to form a film and melt kneaded in the extruder. In this case, the radical scavenging stabilizer may be added directly, or a master polymer may be produced in advance and added like the method 1). The content of the radical scavenging stabilizer in the master polymer is preferably 0.5 to 5 wt%. When the content of the radical scavenging stabilizer falls below the lower limit, the amount of the master polymer increases, which may not be efficient.

It may be difficult to produce a master polymer having a radical scavenging stabilizer content higher than the upper limit.

In the present invention, by adding the radical scavenging stabilizer to the polymerized polyester, the amount of the radical scavenging stabilizer chemically bonded to the polyester can be reduced to 200 ppm or less. When the radical scavenging stabilizer is added in the stage of polymerizing the polyester, the reactive functional group of the radical scavenging stabilizer is reacted with the polyester raw material or a low molecular weight product and easily incorporated in the polyester as a comonomer or terminal group capping agent. As a result, the amount of the radical scavenging stabilizer chemically bonded to the polyester exceeds 200 ppm.

The method 1) or 2) may be used as the main method for adding the radical scavenging stabilizer, and the method in which the radical scavenging stabilizer is added in the stage of polymerizing the polyester resin may be used as an auxiliary method. In this case, the amount of the radical scavenging stabilizer added in the auxiliary method should be as small as possible, e.g., not more than 30%, specifically not more than 10 % based on the total amount of the radical scavenging stabilizers. When the amount of the radical scavenging stabilizer added in the auxiliary method exceeds the above range, the amount of the radical scavenging stabilizer chemically bonded to the polyester exceeds 200 ppm, and the dielectric strength after long-term heating lowers.

The amount of the radical scavenging stabilizer added may be adjusted by using a polymer containing the radical scavenging stabilizer obtained in the method 1) or 2) as the master polymer and melt kneading it with a polymer containing no radical scavenging stabilizer by means of a double-screw kneader.

When inert particles and/or at least one selected from the group consisting of a sulfur-based stabilizer and a phosphorus-based stabilizer are/is contained in the polyester resin composition, these additives may be added in the same manner as the radical scavenging stabilizer.

<film production method>

The method of obtaining the biaxially oriented polyester film of the present invention will be described hereinunder but it is to be understood that the method is not limited to the following examples.

The resin composition obtained by the above method is dried as required and supplied into an extruder to be formed into a sheet form from a T die.

The formed sheet extruded from the T die is solidified by cooling on a cooling drum having a surface temperature of 10 to 60°C, and this unstretched film is heated with a roll or infrared radiation and stretched in the longitudinal direction to obtain a longitudinally stretched film. Longitudinal stretching is preferably carried out by making use of a speed difference between two or more rolls. The longitudinal stretching temperature is preferably higher than the glass transition point (Tg) of the polyester resin, more preferably 20 to 40°C higher than Tg. The longitudinal draw ratio may be suitably adjusted according to the requirement from the use purpose but preferably 2.5 to 5.0 times, more preferably 3.0 to 4.5 times. When the longitudinal draw ratio falls below the lower limit, a satisfactory film may not be obtained due to large nonuniformity in the thickness of the film. When the longitudinal draw ratio exceeds the upper limit, breakage readily occurs during film formation.

The obtained longitudinally stretched film is then stretched in the transverse direction, and optionally heat set and thermally relaxed to obtain a biaxially oriented film. These treatments are carried out while the film is caused to run. Transverse stretching is started at a temperature 20°C higher than the glass transition point (Tg) of the resin and carried out by raising the temperature to a temperature (120-30)°C lower than the melting point (Tm) of the resin. The transverse stretching start temperature is preferably (Tg+40)°C or lower. The transverse stretching maximum temperature is preferably (100-40)°C lower than Tm. When the transverse stretching start temperature is too low, the film is readily broken. When the transverse stretching maximum temperature is lower than (Tm-120)°C, the heat shrinkage factor of the obtained film becomes large and uniformity in physical properties in the transverse direction tends to lower. When the transverse stretching maximum temperature is higher than (Tm-30)°C, the film becomes too soft, and film breakage readily occurs during film formation.

The temperature may be raised continuously or stepwise (sequentially) in the transverse stretching step but generally stepwise. For example, the transverse stretching zone of a tenter is divided into a plurality of sub-zones in the film traveling direction, and a heating medium having a predetermined temperature is let flow in each sub-zone so as to raise the temperature.

The transverse draw ratio may be suitably adjusted according to the requirement from the use purpose but preferably 2.5 to 5.0 times, more preferably 3.0 to 4.5 times. When the transverse draw ratio falls below the lower limit, nonuniformity in the thickness of the film tends to become large, whereby a satisfactory film may not be obtained. When the transverse draw ratio exceeds the upper limit, breakage readily occurs during film formation.

The biaxially oriented film is optionally heat set after that. The dimensional stability at a high temperature of the obtained film can be enhanced by heat setting it.

When the biaxially oriented polyester film of the present invention is a polyethylene-2,6-naphthalene dicarboxylate film, its heat shrinkage factor at 200° is preferably -3 to 3%, more preferably -2 to 2%, particularly preferably -1 to 1 %. When the heat shrinkage factor at 200°C does not fall within the above range, and a metal film is deposited on the film to produce a laminated film as a film capacitor, any one of the base film and the metal film may crease. To set the heat shrinkage factor at 200°C to the above range, heat setting is carried out at preferably (Tm-100°C) or higher, more preferably (Tm-70) to (Tm-40) °C.

The biaxially oriented polyester film of the present invention may be annealed to be gradually cooled in a 50 to 80°C temperature atmosphere after it is heated at 150 to 220°C for 1 to 60 seconds in an off-line step in order to suppress its heat shrinkage.

The polyester resin composition for the biaxially oriented polyester film of the present invention may be further melt kneaded after it is produced by the method 1) as the main method in order to improve the dispersibility in the film of the radical scavenging stabilizer. The kneading method is not particularly limited. Kneading can be carried out by using a single-axis extruder, double-axis extruder or kneader. The melt kneading temperature is 5 to 100°C higher than the melting temperature of the resin component, particularly preferably 10 to 60°C higher than the melting point of the resin. When the melt kneading temperature is too high, the decomposition or abnormal reaction of the resin may occur. The kneading time is at least 30 seconds to 15 minutes, preferably 1 to 10 minutes.

<functional layer>

The biaxially oriented polyester film of the present invention may be a biaxially oriented laminated film comprising another layer on at least one side to provide another function. For example, it may comprise a layer containing an oxygen atom-containing compound on at least one side of a biaxially oriented film in order to improve its self-healing property. The ratio of the oxygen atom to the carbon atom on the surface of this layer measured by X-ray photoelectronic spectroscopy is preferably not less than 10 %, more preferably not less than 15 %. Examples of the oxygen atom-containing compound include cellulose and $SiO_2$. In the case of $SiO_2$, vacuum deposition, ion plating or sputtering may be used.

The functional layer may be a metal layer. Although the material of the metal layer is not particularly limited, it is selected from aluminum, zinc, nickel, chromium, tin, copper and alloys thereof. The metal layer may be formed by vacuum deposition, sputtering or coating via an adhesive.

<application >

Since the biaxially oriented polyester film of the present invention has excellent dielectric strength at a temperature range from room temperature to a high temperature, it can be advantageously used as an electric insulating film, particularly preferably an electric insulating film for electric insulation which is used at a high temperature. More specifically, it can be used as a base film for electric insulation for use in film capacitors, motor insulating members such as wedge materials and slot materials, flexible printed circuit boards and flat cables.

Out of these electric insulation applications, a film capacitor can be obtained by winding up a laminated film having a metal layer on one side of the biaxially oriented polyester film of the present invention or laminating together the biaxially oriented polyester film and the metal layer. A flexible printed circuit board is obtained by forming a metal layer composed of a copper foil or conductive paste on at least one side of the biaxially oriented polyester film of the present invention and forming a fine circuit pattern on the metal layer. A motor insulating member such as a wedge material or slot material is obtained by deforming the biaxially oriented polyester film of the present invention with a punch having an R mark.

Out of the above electric insulation applications, the biaxially oriented polyester film of the present invention is advantageously used for electric insulation applications in which a metal layer is formed on the film, such as film capacitors and flexible printed circuit boards.

Examples

The following examples are provided for the purpose of further illustrating the present invention but are in no way to be taken as limiting. Evaluation items in Examples were measured and evaluated by the following methods. "Parts" and "%" in Examples mean "parts by weight" and "wt%", respectively, unless stated otherwise.

(1) Content of radical scavenging stabilizer

20 mg of a film sample was dissolved in a mixed solvent of heavy trifluoroacetic acid and heavy chloroform (weight ratio of 1:1) and measured a total of 256 times by using a 600 M $^1$H-NMR device.

(2) Amount of radical scavenging stabilizer chemically bonded to polyester

After the film sample was dissolved in a mixed solvent of hexafluoroisopropanol and chloroform, the polymer was reprecipitated by adding methanol, the precipitated polymer was separated, and methanol was added to carry out ultrasonic cleaning in order to remove the residual low molecular weight component. The obtained sample was dried under reduced pressure, and 20 mg of the sample was dissolved in a mixed solvent having weight ratio of 1:1 of heavy trifluoroacetic acid and heavy chloroform and measured a total of 256 times by using a 600 M $^1$H-NMR device to obtain the amount of the radical scavenging stabilizer chemically bonded to the polyester. The detection limit value of the amount of the radical scavenging stabilizer was 200 ppm.

(3) Breakdown voltage at room temperature

The obtained biaxially oriented polyester film was measured at a voltage elevation rate of 0.1 kV/sec by using the ITS-6003 of Tokyo Seiden Co., Ltd. in accordance with the flat electrode method out of DC tests specified in JIS C2151 to obtain a voltage at the time of break as breakdown voltage. The measurement was conducted 50 times (n = 50) to obtain the average value as breakdown voltage. The measurement was carried out at room temperature (25°C).

(4) Breakdown voltage at a high temperature

The obtained biaxially oriented polyester film sample measuring 10 cm x 10 cm was measured 3 times (n = 3) in silicon oil (JIS c2320 insulating oil conforming product) at 150°C by using the TOS5101 withstand voltage tester (of Kikusui Electronics Corp.) to obtain an average value in accordance with JIS K6911 under the following conditions: electrode shape; spherical upper electrode having a diameter of 20 mm, lower electrode measuring 100 mm x 100 mm and having a thickness of 100 $\mu$m (of stainless steel), voltage elevation rate; DC 0.1 kV/sec.

(5) Breakdown voltage difference ($BDV_{t25-t150}$)

The breakdown voltage difference was obtained by subtracting a breakdown voltage at 150°C obtained by the method (4) from a breakdown voltage at 25°C obtained by the method (3).

(6) Breakdown voltage after long-term heating

After the obtained biaxially oriented polyester film was left in a gear oven to be heated at 150 °C for 300 hours, it was taken out from the oven and left at room temperature, and then its breakdown voltage at 25°C was measured. The method (3) was used to measure the breakdown voltage.

(7) Film thickness

The film thickness was measured at a stylus pressure of 30 g by using an electronic micrometer (K-312A of Anritsu Corporation).

(8) Measurement of metal element contained in film

5 g of the film was heated up to 310°C on a hot plate to be molten, and a flat disk was produced from the film. The disk was measured by using the fluorescent X-ray 3270E of Rigaku Corporation to obtain the content of each element in the disk.

<method of producing a titanium catalyst PEN polymer>

P1; 100 parts of dimethyl 2,6-naphthalene dicarboxylate (may be referred to as NDC hereinafter), 60 parts of ethylene glycol (may be referred to as EG hereinafter) and a titanium compound (titanium trimellitate was added in an amount of 15 mmol% in terms of titanium element) were fed to a SUS vessel and heated from 140°C to 240°C to carry out a transesterification reaction, and the reaction mixture was transferred into a polymerization reactor and heated up to 295°C to carry out a polycondensation reaction under a high vacuum of not more than 30 Pa so as to obtain a polyester having an intrinsic viscosity of 0.6 dl/g (polyethylene-2,6-naphthalene dicarboxylate).

<method of producing a PEN polymer containing a radical scavenging stabilizer>

P2; The polyester obtained by the method P1 and the Irganox (registered trademark) 1010 phenol-based stabilizer as a radical scavenging stabilizer were injected into a double-screw extruder set to 300°C and melt kneaded together to obtain a polyester resin composition. The phenol-based stabilizer was used in an amount of 2 wt% ($20 \times 10^3$ ppm) based on the weight of the polyester.

<method of producing a PEN polymer containing a radical scavenging stabilizer>

P3; The polyester obtained by the method P1 and the Irganox (registered trademark) 1330 phenol-based stabilizer as a radical scavenging stabilizer were injected into a double-screw extruder set to 300°C and melt kneaded together to obtain a polyester resin composition. The phenol-based stabilizer was used in an amount of 2.8 wt% ($28 \times 10^3$ ppm) based on the weight of the polyester.

<method of producing an antimony catalyst PEN polymer>

P4; A transesterification reaction between 100 parts of dimethyl naphthalene-2,6-dicarboxylate and 60 parts of ethylene glycol was carried out in the presence of manganese acetate in accordance with a commonly used method, and then antimony trioxide was added in an amount of 300 ppm in terms of the antimony atom to carry out polycondensation in accordance with a commonly used method to obtain polyethylene-2,6-naphthalene dicarboxylate. As for the content of each atom in the polyester, the content of Mn was 50 ppm and the content of Sb was 300 ppm.

<method of producing a PEN polymer containing a radical scavenging stabilizer>

P5; The polyester obtained by using the antimony catalyst in accordance with the method P4 and the Irganox (registered trademark) 1010 phenol-based stabilizer as a radical scavenging stabilizer were injected into a double-screw extruder set to 300°C and melt kneaded together to obtain a polyester resin composition. The phenol-based stabilizer was used in an amount of 0.5 wt% ($5 \times 10^3$ ppm) based on the weight of the polyester.

<method of producing a PEN polymer containing a radical scavenging stabilizer>

P6; The polyester obtained by the method P1 and the Irganox (registered trademark) 1010 phenol-based stabilizer as a radical scavenging stabilizer were injected into a double-screw extruder set to 300°C and melt kneaded together to obtain a polyester resin composition. The phenol-based stabilizer was used in an amount of 6 wt% ($60 \times 10^3$ ppm) based on the weight of the polyester.

<method of producing a PEN polymer containing a radical scavenging stabilizer>

P7; 100 parts of dimethyl 2,6-naphthalene dicarboxylate, 60 parts of ethylene glycol, a titanium compound (titanium trimellitate was added in an amount of 15 mmol% in terms of the titanium atom) and the Irganox (registered trademark) 1010 phenol-based stabilizer were fed to an SUS vessel to ensure that the content of the phenol-based stabilizer became $8 \times 10^3$ ppm based on the weight of the polymer so as to carry out a transesterification reaction by raising the temperature from 140°C to 240°C, and the reaction mixture was transferred to a polymerization reactor and heated up to 295°C to carry out a polycondensation reaction under a high vacuum of not more than 30 Pa so as to obtain polyethylene-2,6-naphthalene dicarboxylate having an intrinsic viscosity of 0.6 dl/g.

P8; 100 parts of dimethyl 2,6-naphthalene dicarboxylate, 60 parts of ethylene glycol, a titanium compound (titanium trimellitate was added in an amount of 15 mmol% in terms of the titanium atom) and the Irganox (registered trademark) 1010 phenol-based stabilizer were fed to an SUS vessel to ensure that the content of the phenol-based stabilizer became $20 \times 10^3$ ppm based on the weight of the polymer so as to carry out a transesterification reaction by raising the temperature from 140°C to 240°C, and the reaction mixture was transferred to a polymerization reactor and heated up to 295°C to carry out a polycondensation reaction under a high vacuum of not more than 30 Pa. However, the melt viscosity of the reaction mixture became too high and exceeded the upper limit of the melt stirring capacity of the polymerizer.

Example 1

The polymer obtained by the method P2 was dried at 180°C for 6 hours and supplied into an extruder heated at 300°C to be formed into a sheet form from a 290°C die. Further, this sheet was solidified by cooling on a cooling drum having a surface temperature of 60°C to obtain an unstretched film which was then guided to rolls heated at 140 °C to be stretched to 3.6 times in the longitudinal direction and cooled with 60°C rolls.

Subsequently, the film which was stretched in the longitudinal direction was guided to a tenter while both ends of the film were held by a clip and stretched to 4.0 times in a direction (transverse direction) perpendicular to the longitudinal direction in an atmosphere where the transverse stretching maximum temperature was 150°C. Thereafter, it was heat set at 210°C for 5 seconds in the tenter, relaxed 1% at 200°C and gradually cooled to room temperature uniformly to obtain a biaxially oriented polyester film having a thickness of 3 μm.

Examples 2 to 4 and Comparative Examples 1 to 5

The procedure of Example 1 was repeated except that the polymer was changed as shown in Table 1 to obtain biaxially oriented films having a thickness of 3 μm.

As obvious from Table 1, as the content of the radical scavenging stabilizer increased, both the breakdown voltages at 25°C and 150°C improved. The film containing a radical scavenging stabilizer had a smaller difference between the breakdown voltage at 25°C and the breakdown voltage at 150°C than a film containing no radical scavenging stabilizer, thereby improving dielectric strength at a high temperature range. Further, the dielectric strength was improved by using a titanium compound as a catalyst. Since the amount of the radical scavenging stabilizer chemically bonded to the polyester was not more than 200 ppm, high dielectric strength after long-term heating was maintained as compared with Comparative Examples in which the amount of the radical scavenging stabilizer chemically bonded to the polyester resin exceeded 200 ppm.

Table 1

| | Polymer composition (wt%) | | | | | | |
|---|---|---|---|---|---|---|---|
| | P1 | P2 | P3 | P4 | P5 | P6 | P7 |
| Type of polymer | PEN | PEN | PEN | PEN | PEN | PEN | PEN |
| Catalyst | Ti | Ti | Ti | Sb | Sb | Ti | Ti |
| Additive | - | Phenol-based | Phenol-based | - | Phenol-based | Phenol-based | Phenol-based |
| Example 1 | | 100 | | | | | |
| Example 2 | | | 100 | | | | |
| Example 3 | 80 | 20 | | | | | |
| Example 4 | 25 | 75 | | | | | |
| Comparative Example 1 | 100 | | | | | | |
| Comparative Example 2 | | | | 100 | | | |
| Comparative Example 3 | | | | | 100 | | |
| Comparative Example 4 | | | | | | 100 | |
| Comparative Example 5 | | | | | | | 100 |

EP 2 164 079 B1

Table 1-continued

| | Content of stabilizer in film | Amount of stabilizer chemically bonded to polyester | Dielectric strength | | | |
|---|---|---|---|---|---|---|
| | | | Breakdown voltage | | Breakdown voltage difference $(BDV_{t25-t150})$ | Breakdown voltage after 150°C x 300 hr |
| | | | 25°C | 150°C | | |
| | (ppm) | (ppm) | (V/μm) | (V/μm) | (V/μm) | (V/μm) |
| Example 1 | $20 \times 10^3$ | Lower than detection limit | 395 | 295 | 100 | 405 |
| Example 2 | $28 \times 10^3$ | Lower than detection limit | 400 | 300 | 100 | 410 |
| Example 3 | $4 \times 10^3$ | Lower than detection limit | 385 | 280 | 105 | 390 |
| Example 4 | $15 \times 10^3$ | Lower than detection limit | 390 | 290 | 100 | 395 |
| Comparative Example 1 | 0 | – | 350 | 200 | 150 | 310 |
| Comparative Example 2 | 0 | – | 330 | 190 | 140 | 280 |
| Comparative Example 3 | $5 \times 10^3$ | Lower than detection limit | 350 | 200 | 150 | 320 |
| Comparative Example 4 | $60 \times 10^3$ | Lower than detection limit | Film formation is impossible due to foaming | | | |
| Comparative Example 5 | $8 \times 10^3$ | $8 \times 10^3$ | 380 | 275 | 105 | 350 |

Since the film of the present invention has high dielectric strength at a temperature range from room temperature to a high temperature and maintains high dielectric strength even after it is heated for a long time as described above, it is preferred as an electric insulating film and can be used as an insulating film for film capacitors, motor insulation and flexible printed circuit boards. It is particularly useful as an insulating film for capacitors used in a car engine room which requires reliability at a high temperature for a long time.

**Claims**

1. A biaxially oriented polyester film for electric insulation, wherein
the film comprises at least one layer made of a polyester, the polyester of the at least one layer contains a titanium compound as a catalyst and a radical scavenging stabilizer, the content of the radical scavenging stabilizer is 1,000 to 50,000 ppm based on the weight of the polyester, and the amount of the radical scavenging stabilizer chemically bonded to the polyester does not exceed 200 ppm.

2. The biaxially oriented polyester film for electric insulation according to claim 1, wherein the content of the radical scavenging stabilizer is 16,000 to 50,000 ppm.

3. The biaxially oriented polyester film according to claim 1 or 2, wherein the radical scavenging stabilizer is at least one selected from the group consisting of a phenol-based stabilizer and an amine-based stabilizer.

4. The biaxially oriented polyester film according to any one of claims 1 to 3, wherein the melting point of the radical scavenging stabilizer is 200°C or higher.

5. The biaxially oriented polyester film according to any one of claims 1 to 4, wherein the polyester of the at least one layer is polyethylene-2,6-naphthalene dicarboxylate.

6. The biaxially oriented polyester film according to any one of claims 1 to 5 which has a breakdown voltage difference represented by the following equation (1) of 50 to 110 V/$\mu$m and a breakdown voltage at 150°C ($BDV_{t150}$) of not less than 280 V/$\mu$m.

$$\texttt{Breakdown voltage difference = BDV}_{t25} \texttt{ - BDV}_{t150} \quad \texttt{(1)}$$

(In the formula, $BDV_{t25}$ is a breakdown voltage (V/$\mu$m) at 25°C and $BDV_{t150}$ is a breakdown voltage (V/$\mu$m) at 150°C.)

7. The biaxially oriented polyester film according to any one of claims 1 to 6 which has a breakdown voltage at 25°C after it is heated at 150°C for 300 hours of not less than 380 V/$\mu$m.

8. The biaxially oriented polyester film according to any one of claims 1 to 7, wherein the polyester of the at least one layer contains 0.0001 to 1 wt% of inert particles.

9. The biaxially oriented polyester film according to any one of claims 1 to 8 which is for film capacitors or motor insulation.

10. A biaxially oriented laminated film comprising the biaxially oriented polyester film of any one of claims 1 to 9 and a metal layer laminated on at least one side of said biaxially oriented polyester film.

11. An electric insulating film which is the biaxially oriented polyester film of any one of claims 1 to 9.

**Patentansprüche**

1. Biaxial orientierte Polyesterfolie zur elektrischen Isolierung, wobei
die Folie mindestens eine Schicht aus einem Polyester umfasst, der Polyester der mindestens einen Schicht eine Titanverbindung als Katalysator und einen radikalfangenden Stabilisator enthält, der Gehalt des radikalfangenden Stabilisators 1000 bis 50.000 ppm, bezogen auf das Gewicht des Polyesters, beträgt und die Menge des chemisch an den Polyester gebundenen radikalfangenden Stabilisators höchstens 200 ppm beträgt.

**2.** Biaxial orientierte Polyesterfolie zur elektrischen Isolierung nach Anspruch 1, wobei der Gehalt des radikalfangenden Stabilisators 16.000 bis 50.000 ppm beträgt.

**3.** Biaxial orientierte Polyesterfolie nach Anspruch 1 oder 2, wobei es sich bei dem radikalfangenden Stabilisator um mindestens einen Stabilisator aus der Gruppe bestehend aus einem auf Phenol basierenden Stabilisator und einem auf Amin basierenden Stabilisator handelt.

**4.** Biaxial orientierte Polyesterfolie nach einem der Ansprüche 1 bis 3, wobei der Schmelzpunkt des radikalfangenden Stabilisators 200°C oder mehr beträgt.

**5.** Biaxial orientierte Polyesterfolie nach einem der Ansprüche 1 bis 4, wobei es sich bei dem Polyester der mindestens einen Schicht um Polyethylen-2,6-naphthalindicarboxylat handelt.

**6.** Biaxial orientierte Polyesterfolie nach einem der Ansprüche 1 bis 5, die eine durch die folgende Gleichung (1) widergegebene Durchschlagspannungsdifferenz von 50 bis 110 V/$\mu$m und eine Durchschlagspannung bei 150°C ($BDV_{t150}$) von mindestens 280 V/$\mu$m aufweist.

$$\mathtt{Durchschlagspannungsdifferenz = BDV_{t25} - BDV_{t150}\ (1)}$$

(In der Formel steht $BDV_{t25}$ für eine Durchschlagspannung (V/$\mu$m) bei 25°C und $BDV_{t150}$ für eine Durchschlag-spannung (V/$\mu$m) bei 150°C.)

**7.** Biaxial orientierte Polyesterfolie nach einem der Ansprüche 1 bis 6, die nach Erhitzen auf 150°C über einen Zeitraum von 300 Stunden eine Durchschlagspannung bei 25°C von mindestens 380 V/$\mu$m aufweist.

**8.** Biaxial orientierte Polyesterfolie nach einem der Ansprüche 1 bis 7, wobei der Polyester der mindestens einen Schicht 0,0001 bis 1 Gew.-% inerte Teilchen enthält.

**9.** Biaxial orientierte Polyesterfolie nach einem der Ansprüche 1 bis 8, die für Folienkondensatoren oder für die Motorisolierung vorgesehen ist.

**10.** Biaxial orientierte Laminatfolie, umfassend die biaxial orientierte Polyesterfolie nach einem der Ansprüche 1 bis 9 und eine auf mindestens eine Seite der biaxial orientierten Polyesterfolie auflaminierte Metallschicht.

**11.** Elektrisch isolierende Folie, bei der es sich um die biaxial orientierte Polyesterfolie nach einem der Ansprüche 1 bis 9 handelt.

**Revendications**

**1.** Film de polyester à orientation biaxiale pour l'isolation électrique, dans lequel
le film comprend au moins une couche constituée d'un polyester, le polyester de l'au moins une couche contient un composé de titane comme catalyseur et un stabilisant antiradicalaire, la teneur du stabilisant antiradicalaire est de 1000 à 50 000 ppm, rapporté au poids du polyester, et la quantité du stabilisant antiradicalaire lié chimiquement au polyester ne dépasse pas 200 ppm.

**2.** Film de polyester à orientation biaxiale pour l'isolation électrique selon la revendication 1, dans lequel la teneur du stabilisant antiradicalaire est de 16 000 à 50 000 ppm.

**3.** Film de polyester à orientation biaxiale selon la revendication 1 ou 2, dans lequel le stabilisant antiradicalaire est au moins un élément choisi dans le groupe constitué par un stabilisant à base de phénol et un stabilisant à base d'amine.

**4.** Film de polyester à orientation biaxiale selon l'une quelconque des revendications 1 à 3, dans lequel le point de fusion du stabilisant antiradicalaire est d'au moins 200 °C.

**5.** Film de polyester à orientation biaxiale selon l'une quelconque des revendications 1 à 4, dans lequel le polyester de l'au moins une couche est le dicarboxylate de polyéthylène-2,6-naphtalène.

**6.** Film de polyester à orientation biaxiale selon l'une quelconque des revendications 1 à 5 qui a une différence de tension de claquage représentée par l'équation (1) suivante de 50 à 110 V/$\mu$m et une tension de claquage à 150 °C (BDV$_{t150}$) supérieure ou égale à 280 V/$\mu$m.

$$\text{Différence de tension de claquage} = \text{BDV}_{t25} - \text{BDV}_{t150} \quad (1)$$

(Dans la formule, BDV$_{t25}$ est la tension de claquage (V/$\mu$m) à 25 °C et BDV$_{t150}$ est la tension de claquage (V/$\mu$m) à 150 °C.)

**7.** Film de polyester à orientation biaxiale selon l'une quelconque des revendications 1 à 6 qui a une tension de claquage à 25 °C après qu'il a été chauffé à 150 °C pendant 300 heures supérieure ou égale à 380 V/$\mu$m.

**8.** Film de polyester à orientation biaxiale selon l'une quelconque des revendications 1 à 7, dans lequel le polyester de l'au moins une couche contient 0,0001 à 1 % en poids de particules inertes.

**9.** Film de polyester à orientation biaxiale selon l'une quelconque des revendications 1 à 8 qui est destiné aux condensateurs à film ou à l'isolation des moteurs.

**10.** Film stratifié à orientation biaxiale comprenant le film de polyester à orientation biaxiale de l'une quelconque des revendications 1 à 9 et une couche métallique laminée sur au moins un côté dudit film de polyester à orientation biaxiale.

**11.** Film isolant électrique qui est le film de polyester à orientation biaxiale de l'une quelconque des revendications 1 à 9.

**EP 2 164 079 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000173855 A
- JP 2005289065 A
- JP 2003301039 A